# FASCICULE DE BREVET EUROPEEN

(11) **EP 1 861 311 B1**
(45) Date de publication et mention de la délivrance du brevet: **10.12.2008**
(21) Numéro de dépôt: 06726226.1
(22) Date de dépôt: 08.03.2006
(51) Int. Cl.: B64C 1/26, B29C 65/00, F16B 5/01

(54) **DISPOSITIF ET PROCÉDÉ D'ÉCLISSAGE MIXTE CARBONE-MÉTAL DISSYMÉTRIQUE**
VORRICHTUNG UND VERFAHREN FÜR EINE UNSYMMETRISCHE KOHLENSTOFF-METALL-GEMISCHANORDNUNG
DEVICE AND METHOD FOR NON-SYMMETRICAL MIXED CARBON-METAL ASSEMBLY

(30) Priorité: 23.03.2005 FR 0550759
(43) Date de publication de la demande: 05.12.2007
(73) Titulaire: AIRBUS France, 31060 Toulouse Cedex 9 (FR)
(72) Inventeur: JACQUES, Emmanuel, F-31470 Fonsorbes (FR)
(74) Mandataire: Schmit, Christian Norbert Marie
(86) Numéro de dépôt international: PCT/FR2006/050202
(87) Numéro de publication internationale: WO 2006/100400

(56) Documents cités:
- WO-A-02/46625
- SU-A1- 1 037 539
- PATENT ABSTRACTS OF JAPAN vol. 018, no. 072 (M-1555), 7 février 1994 (1994-02-07) -& JP 05 286496 A (HONDA MOTOR CO LTD), 2 novembre 1993 (1993-11-02)

## Description

La présente invention concerne un dispositif et un procédé d'éclissage dissymétriques applicables notamment pour la réalisation de structures fortement chargées en particulier dans l'aéronautique.

le document JP-05 286 496, qui montre toutes les caractéristiques du préambule des revendications 1 et 5, concerne un dispositif d'éclissage comportant des éclisses et des contre éclisses de solidarisation d'au moins un premier et un deuxième éléments structurels pour lequel lesdites contre éclisses sont réalisées par des parties élargies de l'un des éléments structurels.

Lors de la réalisation d'un aéronef, diverses parties sont constituées par des assemblages de panneaux raidis ou non, de nervures et de cadres.

Un élément important d'un aéronef est le tronçon central recevant la voilure de l'avion, cet élément en caisson subit des efforts très importants et il est souhaitable d'assurer un bon transfert des efforts, de la voilure vers ce caisson et de ce caisson vers le reste de la structure.

De plus en plus, la réalisation des aéronefs fait appel à des matériaux composites, en particulier à base de carbone et des structures mixtes composite-métallique sont utilisées.

La liaison des pièces constituant les diverses parties des caissons et leur liaison entre eux utilise notamment des techniques d'éclissage, c'est à dire la liaison de panneaux ou de membrures entre eux à l'aide de pièces de jonction boulonnées ou rivetées sur ces panneaux et retransmettant les efforts entre les panneaux ou membrures.

La présente invention concerne un perfectionnement des liaisons par éclissage en particulier adapté à la liaison d'éléments de nature différente tels que des panneaux composites et des éclisses métalliques.

Elle trouve particulièrement son application pour l'assemblage d'un caisson central d'aéronef de grande dimensions en matériaux composites qui doit être pré-assemblé puis déplacé pour recevoir la voilure de l'aéronef tout en conservant ses caractéristiques dimensionnelles au cours des phases d'assemblage.

Pour ce faire la présente invention concerne principalement un dispositif d'éclissage revendication 1 comportant une éclisse et une contre éclisse de solidarisation d'au moins un premier et un deuxième éléments structurels reçus entre l'éclisse et la contre éclisse **caractérisé en ce que** la contre éclisse comporte un nombre de points de fixation inférieur au nombre de points de fixation de l'éclisse de sorte que lesdits premier et deuxième éléments structurels sont fixés entre l'éclisse et la contre éclisse par un nombre de points de fixation inférieur au nombre de points de fixation desdits éléments structurels sur l'éclisse, l'éclissage étant ainsi un éclissage dissymétrique, au moins un des éléments structurels étant un élément réalisé en matériaux composites.

L'invention concerne en outre un procédé d'assemblage revendication 5 par éclissage entre un caisson et un élément de voilure d'aéronef au moyen d'un dispositif d'éclissage selon l'une quelconque des revendications 1 à 4 **caractérisé en ce qu**'on construit un caisson à partir de panneaux structurels en matériaux composites assemblés par des éclisses, au moins une éclisse comportant une première branche fixée dans un premier temps par un point de fixation distal sur au moins un panneau, les autres points de fixation de ladite branche sur ledit panneau restant libres, on présente le caisson en regard de l'élément de voilure avec lequel s'assemble le caisson, on solidarise l'élément de voilure à une deuxième branche de l'éclisse par un point de fixation distal de ladite deuxième branche et on enserre ledit panneau et ledit élément de voilure entre l'éclisse et une contre éclisse au moyen de points de fixation disposés entre ledit point de fixation distal de la première branche et le point de fixation distal de la deuxième branche.

Le dispositif selon l'invention permet notamment de simplifier l'assemblage d'un caisson d'aéronef à la voilure de cet aéronef et une meilleure reprise des efforts de la voilure sur le caisson.

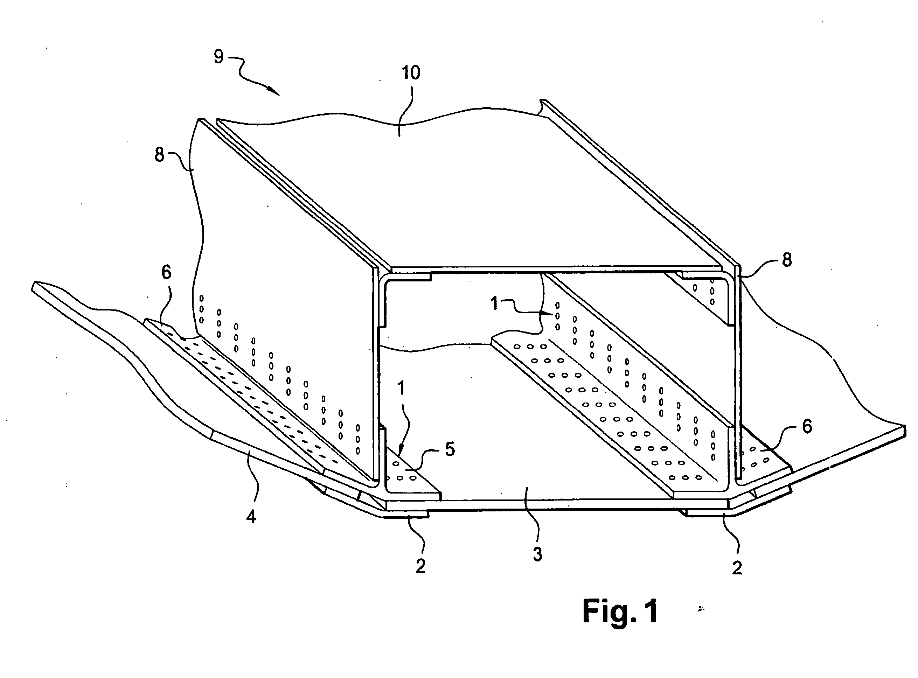

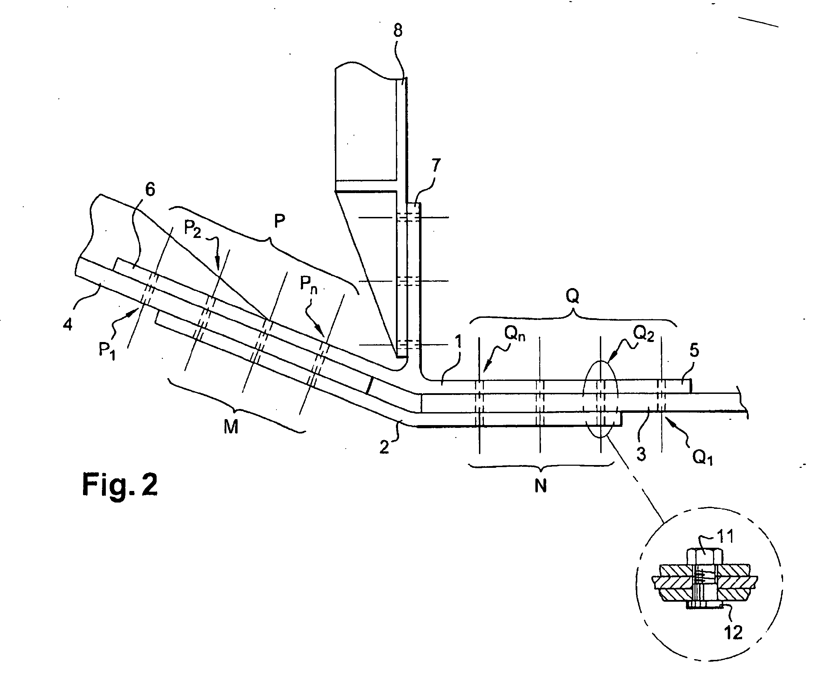

D'autres caractéristiques et avantages de l'invention ressortiront à la lecture de la description qui va suivre d'un exemple non limitatif de réalisation de l'invention en référence aux figures qui représentent:
en figure 1: une vue en perspective schématique d'un exemple de réalisation d'un assemblage de caisson et d'un élément de voilure selon l'invention.
en figure 2: une vue de côté d'un dispositif d'éclissage selon l'invention;

Le dispositif d'éclissage représenté en figure 1 comporte une éclisse 1 et une contre éclisse 2 de solidarisation d'au moins un premier 3 et un deuxième 4 éléments structurels reçus entre l'éclisse 1 et la contre éclisse 2.

Le premier élément structurel 3 est selon l'exemple une partie inférieure d'un caisson central d'un aéronef recevant des éléments de voilure inférieurs de la voilure de l'aéronef, le deuxième élément structurel 4 étant un des éléments de voilure.

Le caisson central est en particulier un caisson réalisé avec des panneaux composites à base de carbone.

L'éclisse est disposée au dessus desdits éléments structurels et une contre-éclisse vient maintenir ces éléments structurels ensemble par dessous.

Selon l'invention, la contre-éclisse 2 comporte un nombre de points de fixation M, N inférieur au nombre de points de fixation P, Q de l'éclisse de sorte que lesdits premier 3 et deuxième 4 éléments structurels sont fixés entre l'éclisse 1 et la contre éclisse 2 par un nombre de points de fixation M + N inférieur au nombre de points de fixation P + Q desdits éléments structurels sur l'éclisse 1, l'éclissage étant ainsi un éclissage dissymétrique.

Un tel éclissage dissymétrique a pour premier avantage de permettre une meilleure répartition des efforts au niveau de la fixation, comme deuxième avantage de permettre un montage préalable des éléments du panneau ensembles, une manutention du caisson voire un transport du caisson vers un poste d'assemblage distant des éléments de voilure, un positionnement et une fixation préalable de l'élément de voilure sur l'éclisse 1, puis une pose ultérieure de la contre-éclisse sans nécessiter de désolidariser les éléments déjà assemblés sur l'éclisse, ce qui pourrait causer un désalignement des points de fixation tant des parois du caisson que de l'élément de voilure avec le caisson.

Un troisième avantage de l'invention combinant éclissage dissymétrique et éléments structurels composites est le gain de masse obtenu, ce pour une tenue statique et en fatigue équivalente à celle d'un éclissage symétrique sur des éléments structurels métalliques.

Du fait que la contre éclisse comporte un nombre moindre de points de fixation sur l'élément structurel, l'éclissage dissymétrique permet en outre une réduction des contraintes thermiques résultant du différentiel de dilatation entre le métal et le matériau composite entre l'éclisse métallique et un élément structurel en matériau composite.

Selon l'exemple de la figure 1 et dans le cas de l'application du dispositif de l'invention à un caisson central recevant des éléments de voilure, l'éclisse 1 est une éclisse en T comportant une première branche 5 de fixation d'un premier élément structurel 3, le fond du caisson, d'une deuxième branche 6, de fixation d'un deuxième élément structurel 4, l'élément de voilure, la deuxième branche étant sensiblement en prolongement de la première branche 5 et une troisième branche 7, de fixation d'un troisième élément structurel 8, une paroi du caisson par exemple, la troisième branche étant inclinée par rapport audites première et deuxième branches 5, 6.

Dans le cadre de l'exemple de la figure 1, le premier et le troisième éléments structurels 3, 8 font partie de faces contiguës du caisson 9 et la première branche 5 de l'éclisse, recevant le premier élément structurel 3, est reçue sur une face interne au caisson 9, la deuxième branche 6 sortant de l'espace interne du caisson par son arête latérale inférieure.

L'éclisse en T réalise ainsi l'arête inférieure du caisson.

En référence à la figure 2 précisant un détail de la construction, la contre éclisse 2 et l'éclisse 1 emprisonnent les premier 3 et second 4 éléments structurels.

Les points de fixation des éléments structurels à l'éclisse et la contre-éclisse sont constitués par des trous réalisés dans les éléments structurels, l'éclisse et la contre-éclisse, ces trous étant disposés de sortent que leur position coïncide pour recevoir des moyens de fixation 11, 12 tels que des dispositifs vis écrous ou des rivets et réaliser l'assemblage.

Comme vu plus haut, le dispositif permet un pré-assemblage des éléments sur l'éclisse en utilisant les points de fixation des extrémités de l'éclisse puis un assemblage final à l'aide de la contre éclisse sans devoir démonter le pré-assemblage.

Ainsi selon l'invention, pour l'assemblage par éclissage d'un caisson 9 avec au moins un élément 4 de voilure d'aéronef, au moyen d'un dispositif d'éclissage comme décrit on construit dans un premier temps le caisson 9 à partir de panneaux structurels 3, 8, 10 assemblés par des éclisses, au moins une éclisse 1 comportant une première branche 5 fixée dans un premier temps par un point de fixation distal Q1 sur au moins un panneau du caisson, en l'occurrence un panneau inférieur du caisson, les autres points de fixation Q2, ..., Qn de la première branche 5 sur ledit panneau restant libres, le caisson ainsi formé pouvant être déplacé, on présente ensuite le caisson 9 en regard de l'élément de voilure 4 avec lequel s'assemble le caisson 9, on aligne et on solidarise l'élément de voilure 4 à une deuxième branche 6 de l'éclisse par un point de fixation distal P1 de la deuxième branche 6, l'ensemble caisson-élément de voilure étant ainsi précisément disposé, et on enserre le panneau 3 et l'élément de voilure 4 entre l'éclisse 1 et une contre éclisse 2 au moyen des points de fixation disposés entre ledit point de fixation distal de la première branche et le point de fixation distal de la deuxième branche, les points de fixation distaux n'étant pas démontés pour maintenir le correct alignement des éléments de panneaux déjà positionnés.

L'invention permet ainsi de construire le caisson par assemblage des panneaux du caisson sur des faces externes de l'éclisse puis de manoeuvrer ce caisson qui conserve alors son intégrité pour qu'il puisse recevoir les éléments de voilure.

Bien entendu, les éléments de voilure gauche et droit de l'aéronef sont assemblés suivant le principe de l'invention.

En outre, l'invention ne se limite pas à l'exemple représenté et, notamment, le dispositif d'éclissage dissymétrique peut être utilisé pour solidariser les éléments supérieurs de voilure audit caisson ou être utilisé pour solidariser d'autres éléments d'un aéronef ou de tout autre construction mécanique.

## Revendications

1. Dispositif d'éclissage comportant une éclisse (1) et une contre éclisse (2) de solidarisation d'au moins un premier (3) et un deuxième (4) éléments structurels reçus entre l'éclisse (1) et la contre éclisse (2) **caractérisé en ce que** la contre éclisse (2) comporte un nombre de points de fixation (M, N) inférieur au nombre de points de fixation (P, Q) de l'éclisse de sorte que lesdits premier (3) et deuxième (4) éléments structurels sont fixés entre l'éclisse (1) et la contre éclisse (2) par un nombre de points de fixation (M + N) inférieur au nombre de points de fixation (P + Q) desdits éléments structurels sur l'éclisse (1), l'éclissage étant ainsi un éclissage dissymétrique, au moins un des éléments structurels étant un élément réalisé en matériaux composites.

2. Dispositif d'éclissage selon la revendication 1 **caractérisé en ce que** l'éclisse (1) est une éclisse en T comportant une première branche (5) de fixation d'un premier élément structurel (3), d'une deuxième branche (6), de fixation d'un deuxième élément structurel (4), sensiblement en prolongement de la première branche (5) et une troisième branche (7), de fixation d'un troisième élément structurel (8), inclinée par rapport audites première et deuxième branches (5, 6).

3. Dispositif d'éclissage selon la revendication 2 **caractérisé en ce que** la contre éclisse (2) et l'éclisse (1) emprisonnent les premier (3) et second (4) éléments structurels.

4. Structure éclissée comportant au moins un dispositif d'éclissage selon la revendication 2 ou 3 **caractérisé en ce que** le premier et le troisième éléments structurels (3, 8) font partie de faces contiguës d'un caisson (9), la première branche (5) de l'éclisse recevant le premier élément structurel (3) étant reçue sur une face interne au caisson (9).

5. Procédé d'assemblage par éclissage entre un caisson (9) et au moins un élément (4) de voilure d'aéronef au moyen d'un dispositif d'éclissage selon l'une quelconque des revendications 1 à 4 **caractérisé en ce qu'**on construit le caisson (9) à partir de panneaux structurels (3, 8, 10) en matériaux composites assemblés par au moins une éclisse et contre éclisse dudit dispositif, au moins une éclisse (1) comportant une première branche (5) fixée dans un premier temps par un point de fixation distal (Q1) sur au moins un panneau, les autres points de fixation (Q2, ..., Qn) de la première branche (5) sur ledit panneau restant libres, on présente le caisson (9) en regard de l'élément de voilure (4) avec lequel s'assemble le caisson (9), on solidarise l'élément de voilure (4) à une deuxième branche (6) de l'éclisse par un point de fixation distal (P1) de la deuxième branche (6) et on enserre le panneau (3) et l'élément de voilure (4) entre l'éclisse (1) et une contre éclisse (2) au moyen des points de fixation disposés entre ledit point de fixation distal de la première branche et le point de fixation distal de la deuxième branche.

6. Procédé selon la revendication 5 **caractérisé en ce qu'**on construit le caisson par assemblage des panneaux du caisson sur des faces externes de l'éclisse.

## Claims

1. A splicing device comprising a splice plate (1) and a splice counterplate (2), for joining at least one first (3) and one second (4) structural element taken up between the splice plate (1) and the splice counterplate (2),
**characterized in that** splice counterplate (2) bears a number of attachment points (M, N) that are fewer than the number of attachment points (P, Q) of the splice plate, so that said first (3) and second (4) structural elements are attached between the splice plate (1) and the splice counterplate (2) by a number of attachment points (M + N) that are fewer than the number of attachment points (P + Q) of said structural elements onto the splice plate (1), splicing thus being a dissymmetric splicing, at least one of the structural elements being made of composite material.

2. The splicing device according to claim 1, further **characterized in that** said splice plate (1) is a T-shaped splice plate bearing a first arm (5) for attaching a first structural element (3), a second arm (6) for attaching a second structural element (4), roughly as an extension of said first arm (5), and a third arm (7), for attaching a third structural element (8), the third arm being inclined relative to said first and second arms (5, 6).

3. Splicing device according to claim 2 **characterized in that** the splice counterplate (2) and the splice plate (1) imprison the first (3) and second (4) structural elements.

4. A spliced structure bearing at least one splicing device according to claim 2 or 3, **characterized in that** the first and third structural elements (3, 8) are part of contiguous surfaces of a box body (9), said first arm (5) of the splice plate receiving said first structural element (3) and being taken up on an inner surface of said box body (9).

5. A process for assembly by splicing of a box body (9) and at least one aircraft wing element (4) by a splicing device according to any of claim 1 to 4, **characterized in that** the box body (9) is constructed from structural panels (3, 8, 10) of composite material assembled by at least on splice plate and splice counterplate of said device, at least one splice plate (1) bearing a first arm (5) attached first by a distal attachment point (Q1) onto at least one panel, the other attachment points (Q2, ..., Qn) of the first arm on said panel remaining free, the box body (9) is presented facing the wing element (4) with which said box body (9) is assembled, said wing element (4) is joined to a second arm (6) of the splice plate by a distal attachment point (P1) of the second arm (6) and said panel (3) and wing element (4) are clamped between said splice plate (1) and splice counterplate (2) by means of attachment points positioned between said distal attachment point of the first arm and the distal attachment point of the second arm.

6. The process according to claim 6, further **characterized in that** the box body is constructed by assembly of box body panels on the outer surfaces of the splice plate.

## Patentansprüche

1. Verbindungsvorrichtung mit einer Schiene (1) und einer Gegenschiene (2) zur Verbindung von mindestens einem ersten (3) und einem zweiten (4) zwischen der Schiene (1) und der Gegenschiene (2) angeordneten Strukturelement, **dadurch gekennzeichnet, dass** die Gegenschiene (2) eine Anzahl von Befestigungspunkten (M, N) aufweist, die kleiner ist als die Anzahl von Befestigungspunkten (P, Q) der Schiene, so dass die ersten (3) und zweiten (4) Strukturelemente zwischen der Schiene (1) und der Gegenschiene (2) durch eine Anzahl von Befestigungspunkten (M + N) befestigt sind, die kleiner als die Anzahl der Befestigungspunkte (P + Q) der Strukturelemente an der Schiene (1) ist, und die Schiene somit eine assymmerische Befestigung ist, und mindestens ein Strukturelement ein Element aus Kompositmaterial ist.

2. Verbindungsvorrichtung nach Anspruch 1, **dadurch gekennzeichnet, dass** die Schiene (1) eine T-Schiene mit einem ersten Ast (5) zur Befestigung eines ersten Strukturelements (3), einem zweiten Ast (6) zur Befestigung eines zweiten Strukturelements (4) im wesentlichen in Verlängerung des ersten Astes (5) und einem dritten Ast (7) zur Befestigung eines dritten Strukturelements (8) schräg zu den ersten und zweiten Ästen (5, 6) ist.

3. Verbindungsvorrichtung nach Anspruch 2, **dadurch gekennzeichnet, dass** die Gegenschiene (2) und die Schiene (1) das erste (3) und das zweite (4) Strukturelement festsetzen.

4. Geschiente Struktur mit mindestens einer Befestigungsvorrichtung gemäß Anspruch 2 oder 3, **dadurch gekennzeichnet, dass** das erste und das dritte Strukturelement (3, 8) Teil der aneinandergrenzenden Seiten eines Kastens (9) sind und der erste Ast (5) der Schiene, der das erste Strukturelement (3) aufnimmt, sich auf der Innenseite des Kastens (9) befindet.

5. Verfahren zum Zusammenfügen eines Kasten (9) mit mindestens einem Tragflächenelement eines Flugzeugs durch Schienenverbindung mittels einer Verbindungsvorrichtung gemäß einem der Ansprüche 1 bis 4, **dadurch gekennzeichnet, dass** man den Kasten (9) aus Strukturelementen (3, 8, 10) aus Kompositmaterial errichtet, die zusammengefügt sind durch mindestens eine Schiene und Gegenschiene der Vorrichtung, wobei mindestens eine Schiene (1) einen ersten Ast (5) aufweist, der zunächst befestigt wird durch einen entfernten Befestigungspunkt (Q1) auf mindestens einer Platte und die anderen Befestigugnspunkte (Q2, ..., Qn) des ersten Astes (5) an der Platte bleiben frei, man den Kasten (9) gegenüber dem Tragflächenelement (4), mit dem der Kasten (9) verbunden wird, anordnet, man das Tragflächenelement (4) mit einem zweiten Ast (6) der Schiene durch einen entfernten Befestigungspunkt (P1) des zweiten Asts (6) verbindet und man die Platte (3) und das Tragflächenelement (4) zwischen der Schiene (1) und der Gegenschiene (2) einschließt mittels der Befestigungspunkte, die zwischen dem entfernten Befestigungspunkt des ersten Astes und dem entfernten Befestigungspunkt des zweiten Astes angeordnet sind.

6. Verfahren nach Anspruch 5, **dadurch gekennzeichnet, dass** der Kasten durch Zusammenbau der Platten des Kastens auf den Außenflächen der Schiene errichtet wird.
